# EUROPÄISCHE PATENTSCHRIFT

(11) **EP 1 893 455 B1**
(45) Veröffentlichungstag und Bekanntmachung des Hinweises auf die Patenterteilung: **17.03.2010**
(21) Anmeldenummer: 06762160.7
(22) Anmeldetag: 23.06.2006
(51) Int. Cl.: B60R 22/40

(54) **SICHERHEITSGURTAUFROLLER MIT EINEM VERSTELLBAREN, NUR BEI GURTBANDEINZUG BEWEGLICHEN SENSOR**
SEAT-BELT RETRACTOR COMPRISING AN ADJUSTABLE SENSOR THAT CAN ONLY BE DISPLACED WHEN THE SEAT-BELT IS RETRACTED
ENROULEUR DE CEINTURE DE SECURITE POURVU D'UN CAPTEUR MOBILE POUVANT ETRE DEPLACE UNIQUEMENT EN CAS D'ENROULEMENT DE LA SANGLE DE CEINTURE

(30) Priorität: 24.06.2005 DE 102005029487
(43) Veröffentlichungstag der Anmeldung: 05.03.2008
(73) Patentinhaber: AUTOLIV DEVELOPMENT AB, 447 83 Vargarda (SE)
(72) Erfinder: SCHMIDT, Martin, 25337 Elmshorn (DE); HÖFS, Stefan, D - 24340 Eckernförde (DE); SCHNEIDER, Thomas, 25813 Simonsberg, Ot Finkhaushallig (DE); ORS, Miriam, E-08201 Sabadell (ES); GASOL, Santi, E-08160 Montmelo (ES); CASIANO, Jordi, E-08210 Barberà del Vallès (ES)
(74) Vertreter: Müller, Karl-Ernst
(86) Internationale Anmeldenummer: PCT/EP2006/006066
(87) Internationale Veröffentlichungsnummer: WO 2006/136434

(56) Entgegenhaltungen:
- DE-A1- 10 143 677
- DE-U1- 20 114 710

## Beschreibung

Die Erfindung betrifft einen Sicherheitsgurtaufroller mit einem mittels eines wenigstens fahrzeugsensitiven Sensors angesteuerten Sperrsystem, wobei der mit einer Ausrichtmasse versehene Sensor zu seiner selbsttätigen Ausrichtung bei einer Änderung der Einbau-Winkellage des Sicherheitsgurtaufrollers schwenkbar an dem Sicherheitsgurtaufroller angeordnet und bei Gurtbandauszug mittels einer durch die Drehung der Gurtwelle in Gurtauszugsrichtung reibungsgesteuerten Blockiervorrichtung in seiner Position festlegbar ist.

Ein Sicherheitsgurtaufroller mit den vorgenannten Merkmalen ist in der DE 201 14 710 U1 beschrieben. Soweit ein derartiger Sicherheitsgurtaufroller beispielsweise in einer in ihrer Neigung verstellbaren Rückenlehne eines Fahrzeugsitzes eingebaut ist, kann sich der mit einer Ausrichtmasse versehene Sensor selbsttätig bei Veränderung der Winkellage des Gurtaufrollers durch Verstellung der Rückenlehne in der Vertikalen ausrichten, so dass die Ansprechschwelle des Sensors hinsichtlich auftretender Fahrzeugbeschleunigungen beziehungsweise Fahrzeugverzögerungen unverändert bleibt. Da sich der Sensor jedoch auch bei Bremsvorgängen und den damit verbundenen Fahrzeugverzögerungen ausrichtet und damit verstellt, ist bei dem bekannten Sicherheitsgurtaufroller bereits eine Blockiervorrichtung vorgesehen, mittels welcher der Sensor bei jedem Gurtbandauszug automatisch festgelegt ist, da davon ausgegangen wird, dass es bereits frühzeitig in einem Unfallgeschehen zu einem Gurtbandauszug mit Drehung der Gurtwelle in Gurtauszugsrichtung kommt. Als Steuer- und Blockiervorrichtung für die Sensormasse ist bei dem bekannten Sicherheitsgurtaufroller eine zweischenklige Reibfeder auf einer mit der Gurtwelle verbundenen Reibscheibe angeordnet, deren einer Schenkel an dem Sicherheitsgurtaufroller beweglich gehaltert und deren anderer Schenkel gegen eine an dem Sensor ausgebildete Verzahnung anliegt. Im Falle der Drehung der Gurtwelle in Gurtauszugsrichtung dreht sich die Reibfeder in eine Stellung, in welcher ihr Schenkel den Sensor festlegt. Bei einer Rückdrehung der Gurtwelle in Aufwickelrichtung dreht sich die Reibfeder ebenfalls zurück, wobei ihr Blockierschenkel den Sensor wieder freigibt.

Mit dem bekannten Sicherheitsgurtaufroller ist der Nachteil verbunden, dass die Festlegung des Sensors nur während des Gurtbandauszuges wirksam ist, während bei einem Stillstand der Gurtwelle der Sensor für eine Ausrichtbewegung frei ist. Soweit beispielsweise bei einem einem eventuellen Unfall vorangehenden Anbremsen des Kraftfahrzeuges auch ohne einen schon beginnenden Gurtbandauszug eine Änderung der Lage des Sensors mit einer damit einhergehenden Änderung seiner Ansprechschwelle auftreten kann, liegt der Erfindung die Aufgabe zugrunde, bei einem Sicherheitsgurtaufroller mit den gattungsgemäßen Merkmalen sicherzustellen, dass eine Freigabe des Sensors ausschließlich bei einem Gurtbandeinzug gegeben ist, da unterstellt werden kann, dass während des Gurtbandeinzuges Gefährdungen der angeschnallten Person nicht auftreten.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Blockiervorrichtung für den Sensor aus einem drehbar angeordneten Blockierhebel besteht, der mittels eines über eine Reibkupplung an die Gurtwelle gekoppelten Steuerhebels bei Drehung der Gurtwelle in Gurteinzugsrichtung in seine Freigabestellung für den Sensor bewegbar ist.

Gemäß der Erfindung ist es in vorteilhafter Weise möglich, ausschließlich bei einem Gurtbandeinzug die Freigabe des Blockierhebels für den Sensor einzurichten, so dass lediglich während des Gurtbandeinzuges, beispielsweise beim Ablegen des Sicherheitsgurtes, jedoch auch bei einem im unmittelbaren Anschluss an das Anlegen des Sicherheitsgurtes üblichen Rücklauf des Gurtbandes eine Nachausrichtung des Sensors gegeben ist.

Soweit nach einem Ausführungsbeispiel der Erfindung vorgesehen, dass der Blockierhebel in seine den Sensor festlegende Blockierstellung vorgespannt ist, ist hiermit der Vorteil verbunden, dass aufgrund der Vorspannung des Blockierhebels in seine den Sensor festlegende Blockierstellung zunächst einmal sichergestellt ist, dass der Sensor sich auch bei in der Ruhelage stehender, sich nicht drehender Gurtwelle nicht bewegen kann, vielmehr durch den Blockierhebel festgelegt ist. Dabei kann vorgesehen sein, dass der Blockierhebel mittels einer Druckfeder in seine Blockierstellung vorgespannt ist.

Nach einem ersten Ausführungsbeispiel der Erfindung ist hinsichtlich der Ausbildung der Reibkupplung vorgesehen, dass die Reibkupplung als mit einer viskosen Flüssigkeit gefüllte Flüssigkeitskupplung mit einer derartigen Auslegung ausgebildet ist, dass deren Gleitreibungskoeffizient größer ist als deren Haftreibungskoeffizient, wobei nach einem Ausführungsbeispiel die Flüssigkeitskupplung mit einem Silikon gefüllt sein kann.

Im Rahmen einer derartigen Betriebsweise des in seine Blockierstellung vorgespannten Blockierhebels besteht das Problem, dass einerseits die reibschlüssige Verbindung des Steuerhebels mit der Gurtwelle so groß ausgelegt sein muss, dass bei Drehung der Gurtwelle in Gurteinzugsrichtung über den Steuerhebel der Blockierhebel entgegen der auf ihn wirkenden Vorspannung in seine Freigabestellung für den Sensor bewegbar ist. Andererseits soll die Reibung klein genug sein, dass die eingestellte Vorspannung ausreicht, bei ruhender Gurtwelle den Blockierhebel in dessen Blockierlage zu verstellen, wobei der Steuerhebel ebenfalls in seine Ruhelage zurückzuführen ist. Zur Lösung dieses Problems ist die Reibkupplung so auszulegen, dass deren Gleitreibungskoeffizient größer ist als deren Haftreibungskoeffizient.

Entsprechend kann alternativ vorgesehen sein, dass die Reibkupplung als Wirbelstromkupplung mit einer derartigen Auslegung ausgebildet ist, dass deren Gleitreibungskoeffizient größer ist als deren Haftreibungskoeffizient.

In einer alternativen Ausführungsform hinsichtlich der Ausbildung der Reibkupplung kann vorgesehen sein, dass der Steuerhebel auf einem Fortsatz der Gurtwelle schwenkbar gelagert ist und die Reibkupplung aus einer auf dem Fortsatz der Gurtwelle angeordneten und den Blockierhebel beaufschlagenden Reibfeder besteht.

Zur Verbindung zwischen dem Steuerhebel und dem Blockierhebel kann nach einem Ausführungsbeispiel der Erfindung vorgesehen sein, dass der Blockierhebel an seinem der Eingriffsspitze abgewandten Ende eine derart gestaltete Auflagerfläche für den Kopf des Steuerhebels aufweist, dass eine Verschwenkung des Steuerhebels die Drehung des Blockierhebels bewirkt.

Alternativ kann vorgesehen sein, dass die Verbindung zwischen Blockierhebel und Steuerhebel in Form einer Langlochverbindung mit einem in dem Blockierhebel ausgebildeten Langloch und einem in das Langloch eingreifenden Kopf des Steuerhebels ausgebildet ist.

In der Zeichnung sind Ausführungsbeispiele der Erfindung wiedergegeben, welche nachstehend beschrieben sind. Es zeigen:
- Fig. 1: die Systemseite eines Sicherheitsgurtaufrollers in einer schematischen Darstellung mit einem beweglichen Sensor und einer Blockiervorrichtung hierfür,
- Fig. 2: ein anderes Ausführungsbeispiel einer zwischen Gurtwelle und Steuerhebel ausgebildeten Reibkupplung in einer schaubildlich Darstellung der zusammenwirkenden Einzelteile,
- Fig. 3: den Gegenstand der Figur 2 in einer anderen Darstellung .

An dem in der Zeichnung schematisch dargestellten Gurtaufroller 10 ist ein Sensor 11 in Form eines schematisch dargestellten Sensorgehäuses drehbar angeordnet. Aufbau und Funktion des Sensors 11 sind in der gattungsgemäßen DE 201 14 710 U1 im einzelnen erläutert, so dass auf diesen Stand der Technik Bezug genommen wird. Die diesbezüglichen Merkmale zählen insoweit auch nicht zum Gegenstand der vorliegenden Erfindung.

Der Sensor 11 ist zu seiner Festlegung über einen an dem Gurtaufroller 10 um eine Drehachse 15 drehbar gelagerten Blockierhebel 13 mit einer Verzahnung 12 versehen derart, dass der Blockierhebel 13 in seiner Blockierstellung mit seiner Eingriffsspitze 14 in Eingriff mit der Verzahnung 12 gelangt. Hierzu ist der Blockierhebel 13 zwischen einer Freigabestellung für den Sensor 11, in welcher die Eingriffsspitze 14 von der Verzahnung 12 frei ist, und einer in der Zeichnung dargestellten Blockierstellung mit Eingriff der Eingriffsspitze 14 in die Verzahnung 12 schwenkbar. Der Blockierhebel 13 ist dabei durch eine sich zwischen Blockierhebel 13 und Gurtaufroller 10 abstützende Druckfeder 19 in die in der Zeichnung dargestellte Blockierstellung vorgespannt.

An dem Blockierhebel 13 greift ein mittels einer nicht weiter dargestellten Reibkupplung mit der Gurtwelle 18 gekoppelter Steuerhebel 17 an, wobei die Verbindung von Steuerhebel 17 und Blockierhebel 13 in Form einer Langlochverbindung mit einem in dem Blockierhebel 13 ausgebildeten Langloch 16 ausgeführt ist, um bei Drehung des Steuerhebels 17 eine Verdrehung des Blockierhebels 13 zwischen dessen angesprochener Blockierstellung und Freigabestellung einzurichten.

Wie nicht weiter dargestellt ist die Reibkupplung als mit Silikon gefüllte Flüssigkeitskupplung ausgebildet, wobei mit der Gurtwelle 18 ein Kupplungsteil mit einer Fläche verbunden ist, während ein weiteres Kupplungsteil mit einer zugeordneten Fläche mit dem Steuerhebel 17 verbunden ist. Soweit zwischen den gegeneinander beweglichen Flächen beispielsweise Silikon als Flüssigkeit ansteht, wird aufgrund der Viskosität des Silikons bei einer Relativbewegung der beiden gegeneinander beweglichen Flächen eine Scherspannung erfolgt, worauf noch einzugehen ist.

Wie sich aus der Zeichnung ergibt, ist der Blockierhebel 13 durch die Druckfeder 19 in seine Blockierstellung mit Eingriff der Eingriffspitze 14 in die Verzahnung 12 des Sensors 11 vorgespannt. In dieser Stellung kann sich der Sensor 11 mit der an ihm befindlichen Ausrichtmasse auch bei auf ihn einwirkenden Fahrzeugbeschleunigungen beziehungsweise Fahrzeugverzögerungen nicht bewegen. Diese Stellung des Blockierhebels 13 wird bei stehender Gurtwelle ebenso wie bei sich in Gurtauszugsrichtung (Pfeil 22) drehender Gurtwelle 18 aufrechterhalten. Bei der Drehung der Gurtwelle in Gurtauszugsrichtung liegt der Steuerhebel 17 gegen das Ende 23 des Langloches 16 in dem Blockierhebel 13 an und kann somit der Drehbewegung der Gurtwelle nicht folgen.

Kommt es zu einer Drehung der Gurtwelle 18 in Einzugsrichtung (Pfeil 21), so führt die durch die Relativbewegung der zugeordneten Kupplungsflächen erzeugte Scherspannung zu einer Mitnahme des Steuerhebels 17 in der Drehrichtung der Gurtwelle 18, so dass dadurch der Blockierhebel 13 aus seinem Eingriff mit der Verzahnung 12 des Sensors 11 herausbewegt und somit entgegen der Kraft der Druckfeder 19 in seine Freigabestellung bewegt wird. Insofern ist die Kupplungskraft für die Mitnahme des Steuerhebels 17 größer ausgelegt als die Kraft der Druckfeder 19. Ist die Drehung der Gurtwelle 18 in Gurteinzugsrichtung beendet und kommt es insoweit zu einem Stillstand der Gurtwelle 18, so ist der Gleitreibungskoeffizient nicht mehr wirksam, vielmehr kommt der niedrigere Haftreibungskoeffizient bei Stillstand der Flüssigkeitskupplung zum Tragen, so dass die Kraft der Druckfeder 19 den Widerstand des Steuerhebels 17 überwinden und den Blockierhebel 13 einschließlich des daran gekoppelten Steuerhebels 17 wieder in die Blockierstellung des Blockierhebels 13 zurückdrücken kann.

Auf diese Weise ist gewährleistet, dass die Ausrichtung des Sensors 11 nur unter den sicheren Betriebsbedingungen erfolgt, wenn an dem Sicherheitsgurtaufroller 10 ein Gurtbandeinzug (Pfeil 21) stattfindet.

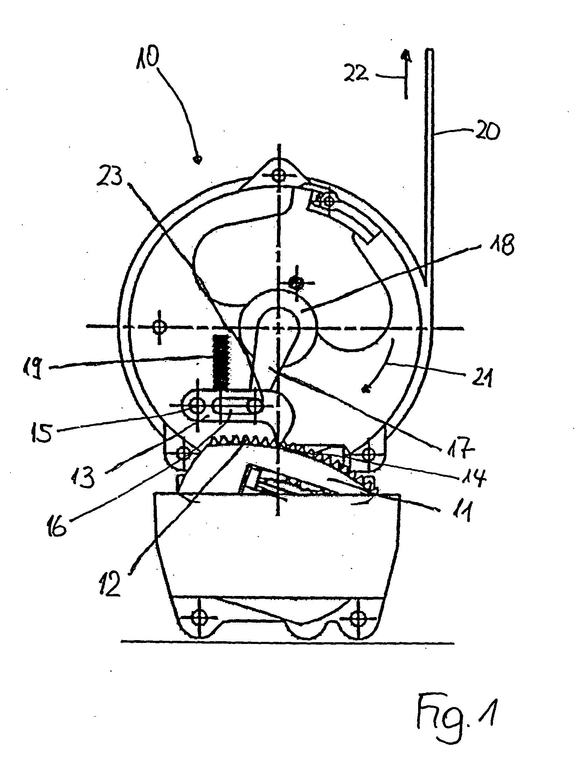

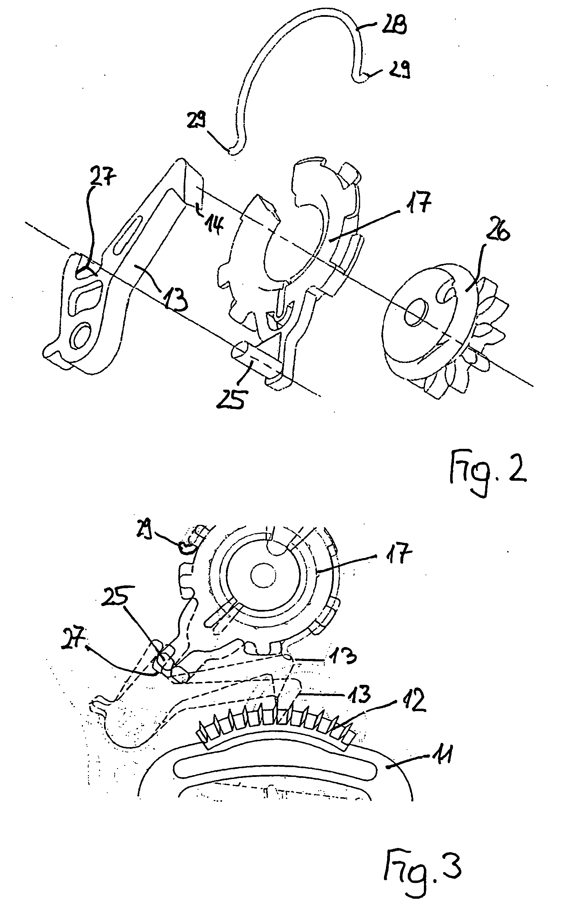

In den Figuren 2 und 3 ist ein Ausführungsbeispiel der Erfindung dargestellt, bei welchem die Reibkupplung im Gegensatz zu einer zu Figur 1 beschriebenen Flüssigkeitskupplung aus einer auf einem Fortsatz der Gurtwelle angeordneten und den Blockierhebel beaufschlagenden Reibfeder besteht. Bei diesem Ausführungsbeispiel ist es nicht erforderlich, dass der Blockierhebel in seine den Sensor festlegende Blockierstellung vorgespannt ist, weil der Blockierhebel in seiner Drehbewegung über die Reibfeder an die Wellenbewegung gekoppelt ist.

Wie sich aus Figur 2 ergibt, ist der Steuerhebel 17 auf einem Fortsatz 26 der in dieser Darstellung nicht weiter dargestellten Gurtwelle drehbar gelagert, wobei auf dem Wellenfortsatz 26 ebenfalls eine den Umfang des Wellenfortsatzes 26 teilweise umschließende Reibfeder 28 angeordnet ist, die über abgebogene Mitnahmeenden 29, welche in zugeordnete Ausnehmungen des Steuerhebels 17 eingreifen, an den Steuerhebel 17 gekoppelt ist. An seinem freien Ende hat der Steuerhebel 17 einen Kopf 25, über welchen der Steuerhebel 17 mit dem Blockierhebel 13 zusammenwirkt; beispielsweise kann der Kopf 25 bei den zu Figur 1 beschriebenen Ausführungsbeispielen in das Langloch 16 des Blockierhebels 13 eingreifen.

Wie sich hinsichtlich der alternativen Ausführungsform mit der Gestaltung einer Reibfeder 28 aus Figur 3 ergibt, hat der Blockierhebel 13 an seinem seiner Eingriffsspitze 14 abgewandten Ende eine Auflagerfläche 27 für den Kopf 25 des Steuerhebels 17, die derart ausgestaltet ist, dass eine Verschwenkung des Steuerhebels 17 die Drehung des Blockierhebels 13 bewirkt. Hierzu ist in durchgezogenen Linien die Freigabestellung des Steuerhebels 17 für die Verzahnung 12 des Sensors 11 dargestellt, während in gestrichelten Linien die Eingriffsstellung des Blockierhebels 13 in die Verzahnung 12 dargestellt ist. Soweit der Drehweg des Blockierhebels 13 zwischen seiner Eingriffsstellung und seiner Freigabestellung mechanisch begrenzt ist, wird bei entsprechender Drehung der Gurtwelle beziehungsweise ihres Fortsatzes 26 über die Reibfeder 28 des Steuerhebels 17 in Drehung versetzt. Erreicht der von dem Steuerhebel 17 beaufschlagte Blockierhebel 13 seinen jeweiligen Endanschlag, kann sich die Gurtwelle mit Fortsatz 26 in der Reibfeder 28 weiterdrehen.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtaufroller mit einem mittels eines wenigstens fahrzeugsensitiven Sensors angesteuerten Sperrsystem, wobei der mit einer Ausrichtmasse versehene Sensor zu seiner selbsttätigen Ausrichtung bei einer Änderung der Einbau-Winkellage des Sicherheitsgurtaufrollers schwenkbar an dem Sicherheitsgurtaufroller angeordnet und bei Gurtbandauszug mittels einer durch die Drehung der Gurtwelle in Gurtauszugsrichtung reibungsgesteuerten Blockiervorrichtung in seiner Position festlegbar ist, **dadurch gekennzeichnet, dass** die Blockiervorrichtung für den Sensor (11) aus einem drehbar angeordneten Blockierhebel (13) besteht, der mittels eines über eine Reibkupplung an die Gurtwelle (18) gekoppelten Steuerhebels (17) bei Drehung der Gurtwelle (18) in Gurteinzugsrichtung in seine Freigabestellung für den Sensor (11) bewegbar ist.

2. Sicherheitsgurtaufroller nach Anspruch 1, **dadurch gekennzeichnet, dass** der Blockierhebel (13) in seine den Sensor (11) festlegende Blockierstellung vorgespannt ist.

3. Sicherheitsgurtaufroller nach Anspruch 2, **dadurch gekennzeichnet, dass** der Blockierhebel (13) mittels einer Druckfeder (19) in seine Blockierstellung vorgespannt ist.

4. Sicherheitsgurtaufroller nach einem der Ansprüche 1 bis 3, **dadurch gekennzeichnet, dass** die Reibkupplung als mit einer viskosen Flüssigkeit gefüllte Flüssigkeitskupplung mit einer derartigen Auslegung ausgebildet ist, dass deren Gleitreibungskoeffizient größer ist als deren Haftreibungskoeffizient.

5. Sicherheitsgurtaufroller nach Anspruch 4, **dadurch gekennzeichnet, dass** die Flüssigkeitskupplung mit Silikon gefüllt ist.

6. Sicherheitsgurtaufroller nach einem der Ansprüche 1 bis 3, **dadurch gekennzeichnet, dass** die Reibkupplung als Wirbelstromkupplung mit einer derartigen Auslegung ausgebildet ist, dass deren Gleitreibungskoeffizient größer ist als deren Haftreibungskoeffizient.

7. Sicherheitsgurtaufroller nach Anspruch 1, **dadurch gekennzeichnet, dass** der Steuerhebel (17) auf einem Fortsatz (26) der Gurtwelle (18) schwenkbar gelagert ist und die Reibkupplung aus einer auf dem Fortsatz (26) der Gurtwelle (18) angeordneten und den Blockierhebel (13) beaufschlagenden Reibfeder (28) besteht.

8. Sicherheitsgurtaufroller nach einem der Ansprüche 1 bis 7, **dadurch gekennzeichnet, dass** der Blockierhebel (13) an seinem der Eingriffsspitze (14) abgewandten Ende eine derart gestaltete Auflagerfläche (27) für den Kopf (25) des Steuerhebels (17) aufweist, dass eine Verschwenkung des Steuerhebels (17) die Drehung des Blockierhebels (13) bewirkt.

9. Sicherheitsgurtaufroller nach einem der Ansprüche 1 bis 7, **dadurch gekennzeichnet, dass** die Verbindung zwischen Blockierhebel (13) und Steuerhebel (17) in Form einer Langlochverbindung mit einem in dem Blockierhebel (13) ausgebildeten Langloch (16) und einem in das Langloch (16) eingreifenden Kopf (25) des Steuerhebels (17) ausgebildet ist.

## Claims

1. Seatbelt retractor comprising a locking system that is controlled by means of at least one vehicle-sensitive sensor, wherein said sensor, which is provided with an alignment mass for autonomous alignment, is located to pivot on the seatbelt retractor when the angular installation position of the seatbelt retractor is modified and, when the seatbelt is extended, can be fixed in position by means of a blocking device that is friction-controlled by the rotation of the belt shaft in the extension direction, **characterized in that** the blocking device for the sensor (11) consists of a rotatably mounted blocking lever (13) which can be displaced into its release position for the sensor (11) by means of a control lever (17) coupled to the belt shaft (18) by a friction coupling when the belt shaft (18) rotates in the retraction direction.

2. Seatbelt retractor according to claim 1, **characterized in that** the blocking lever (13) is prestressed in its blocking position fixing the sensor (11).

3. Seatbelt retractor according to claim 2, **characterized in that** the blocking lever (13) is prestressed in its blocking position by means of a compression spring (19).

4. Seatbelt retractor according to one of the claims 1 to 3, **characterized in that** the friction coupling is configured as fluid coupling filled with a viscous fluid in such a manner that its coefficient of sliding friction is larger than its coefficient of static friction

5. Seatbelt retractor according to claim 4, **characterized in that** the fluid coupling is filled with silicone.

6. Seatbelt retractor according to one of the claims 1 to 3, **characterized in that** the friction coupling is configured as an eddy-current coupling with such a configuration that its coefficient of sliding friction is larger than its coefficient of static friction.

7. Seatbelt retractor according to claim 1, **characterized in that** the control lever (17) is pivot-mounted on an extension (26) of the belt shaft (18) and that the friction coupling comprises a friction spring (28), which is located on the extension (26) of the belt shaft (18) and impinges the blocking lever (13).

8. Seatbelt retractor according to one of the claims 1 to 7, **characterized in that** the end of blocking lever (13) opposite the engagement tip (14) has a bearing surface (27) for the head (25) of the control lever (17), the bearing surface being configured in such a manner that a pivoting of the control lever (17) causes the blocking lever (13) to rotate.

9. Seatbelt retractor according to one of the claims 1 to 7, **characterized in that** the connection between the blocking lever (13) and control lever (17) is configured in the form of a longitudinal-hole connection comprising a longitudinal hole (16) configured in the blocking lever (13) and a head (25) of the control lever (17) engaging the longitudinal hole (16).

## Revendications

1. Enrouleur de ceinture de sécurité comportant un système de blocage, activé par au moins un capteur sensible au véhicule, sachant que ledit capteur, muni d'une masse d'alignement, est disposé de manière pivotante sur l'enrouleur de ceinture de sécurité pour son alignement automatique lors d'une variation de la position angulaire de montage de l'enrouleur de ceinture de sécurité, et, en cas de déploiement de la ceinture de sécurité peut être immobilisé dans sa position au moyen d'un dispositif de blocage commandé par friction sous l'effet de la rotation de l'arbre d'enroulement dans le sens de déploiement de la ceinture, **caractérisé en ce que** le dispositif de blocage pour le capteur (11) est formé par un levier de blocage (13) monté rotatif, qui, lors de la rotation de l'arbre d'enroulement (18) dans le sens de rétraction de la ceinture, peut être déplacé dans sa position de déblocage pour le capteur (11) au moyen d'un levier de commande (17) couplé à l'arbre d'enroulement (18) par l'intermédiaire d'un couplage à friction.

2. Enrouleur de ceinture de sécurité selon la revendication 1, **caractérisé en ce que** le levier de blocage (13) est précontraint dans sa position de blocage immobilisant le capteur (11).

3. Enrouleur de ceinture de sécurité selon la revendication 2, **caractérisé en ce que** le levier de blocage (13) est précontraint dans sa position de blocage par un ressort de pression (19).

4. Enrouleur de ceinture de sécurité selon l'une quelconque des revendications 1 à 3, **caractérisé en ce que** le couplage à friction est réalisé sous la forme d'un système de couplage rempli d'un liquide visqueux et ayant un dimensionnement tel que son coefficient de frottement par glissement est supérieur au coefficient de frottement par adhérence.

5. Enrouleur de ceinture de sécurité selon la revendication 4, **caractérisé en ce que** le système de couplage à liquide est rempli de silicone.

6. Enrouleur de ceinture de sécurité selon l'une quelconque des revendications 1 à 3, **caractérisé en ce que** le couplage à friction est réalisé sous la forme d'un couplage à tourbillonnement avec un dimensionnement tel que son coefficient de frottement par glissement est supérieur au coefficient de frottement par adhérence.

7. Enrouleur de ceinture de sécurité selon la revendication 1, **caractérisé en ce que** le levier de commande (17) est monté pivotant sur une saillie (26) de l'arbre d'enroulement (18) et le couplage à friction est formé par un ressort de frottement (28) disposé sur la saillie (26) de l'arbre d'enroulement (18) et sollicitant le levier de blocage (13).

8. Enrouleur de ceinture de sécurité selon l'une quelconque des revendications 1 à 7, **caractérisé en ce que** le levier de blocage (13), au niveau de son extrémité détournée de la pointe de prise (14), comporte une surface d'appui (27) pour la tête (25) du levier de commande (17), laquelle est conçue de telle sorte qu'un pivotement du levier de commande (17) induit la rotation du levier de blocage (13).

9. Enrouleur de ceinture de sécurité selon l'une quelconque des revendications 1 à 7, **caractérisé en ce que** la liaison entre le levier de blocage (13) et le levier de commande (17) est réalisée sous la forme d'une liaison par trou oblong avec un trou oblong (16), ménagé dans le levier de blocage (13), et une tête (25) du levier de commande (17) s'engageant dans le trou oblong (16).
